# EUROPEAN PATENT APPLICATION

(11) **EP 4 664 907 A1**
(43) Date of publication of application: **17.12.2025**
(21) Application number: 23947404.2
(22) Date of filing: 12.12.2023
(51) Int. Cl.: H04N 23/50

(54) **IMAGE PROCESSING APPARATUS AND ELECTRICAL CONNECTION MECHANISM**

(30) Priority: 31.07.2023 CN 202322021264 U
(71) Applicant: Iray Technology Co., Ltd., Yantai, Shandong 264006 (CN)
(72) Inventor: YAO, Yao, Yantai, Shandong 264006 (CN)
(74) Representative: ABG Intellectual Property Law, S.L.
(86) International application number: PCT/CN2023/138030
(87) International publication number: WO 2025/025467

(57) **Abstract**

An image processing apparatus and an electrical connection mechanism, the image processing apparatus comprising an apparatus body, wherein the apparatus body is provided with a connection compartment, and the connection compartment is provided with an internal connecting assembly, the internal connecting assembly being electrically connected to both a power supply circuit and data communication circuit of the apparatus body. The image processing apparatus further comprises an external connecting assembly for detachably connecting to the connection compartment, the external connecting assembly being a power supply assembly or communication assembly. When the power supply assembly connects to the connection compartment, the power supply assembly electrically connects to the power supply circuit of the apparatus body by means of the internal connecting assembly and supplies power to the power supply circuit; when the communication assembly connects to the connection compartment, the communication assembly electrically connects to the data communication circuit of the apparatus body by means of the internal connecting assembly and performs data communication with the data communication circuit. While realizing the basic functions of power supply and data communication, the present invention can expand product usage forms, and also enables the product size to be minimized, thereby realizing a miniaturized product design.

## Description

The present application claims the priority to Chinese Patent Application No. 202322021264.2, titled "IMAGE PROCESSING DEVICE", filed with the China National Intellectual Property Administration on July 31, 2023, the entire content of which is incorporated herein by reference.

### FIELD

The present application relates to the technical field of image processing, and in particular to an image processing device. The present application also relates to an electrical connection mechanism.

### BACKGROUND

With the development of image technology, various types of image processing devices have been widely used.

Night vision devices are common image processing devices and nighttime observation tools, which can help users to improve the efficiency of night activities, target searching and identification. The working principle of the night vision devices is to convert low-illumination light invisible to the human eye into visible light, and amplify the visible light through an optical system to increase the brightness and clarity, so that the human eye can easily identify and monitor the target at night. Depending on the working principle, the night vision devices may be classified into low-light-level night vision devices, thermal-imaging night vision devices, digital night vision devices, etc.

The night vision devices require constant and stable power supply during operation. Currently, a night vision device in the related art is typically provided with a separate battery compartment on a device body, and multiple disposable dry batteries, rechargeable lithium batteries or the like are mounted in the battery compartment for supplying power. The number and type of the batteries may be adjusted according to the power consumption of various products, and the shape and size of the battery compartment may be changed accordingly. However, the night vision device typically has large power consumption and requires a number of batteries with a large size, causing the battery compartment to have large size and volume and take up a considerable amount of space within the physical configuration of the night vision device, resulting in large overall volume and size of the night vision device.

In addition, the night vision device performs data communication between internal and external components during design, debugging, product application, maintenance, etc. For example, during operation of the night vision device, real-time image data obtained by an imaging module has to be sent to a core module of the night vision device. The image data will be processed and stored in the core module, and then output to an external device such as a server or a host controller. Currently, the night vision device in the related art is typically provided with a separate signal connector on the device body, so as to perform data communication between the device body and the external device through the signal connector. However, the signal connector also takes up a certain space in the night vision device product, and a mounting position of the signal connector is designed to avoid the battery compartment. As a result, the signal connector further contributes to the increase in the overall size of the night vision device on top of the battery compartment, which is undesirable for a miniaturized product design.

Consequently, in the related art, the battery compartment is configured only for the installation of batteries, and the signal connector is configured only for the connection of signal cables, each offering a single operational mode. As a result, for the conventional night vision device, the device body requires both the battery compartment and the signal connector to perform the power supply function and the data communication function respectively, causing the size of the product to increase, which is undesirable for a miniaturized product design.

Therefore, a technical issue to be addressed by those skilled in the art is how to expand the operational mode of product and minimize the product size while providing power supply and data communication functions, thereby realizing a miniaturized product design.

### SUMMARY

An object of the present application is to provide an image processing device, which has expanded product operational mode and minimized product size while performing power supply and data communication functions, thereby realizing a miniaturized product design. Another object of the present application is to provide an electrical connection mechanism.

To address the technical issue mentioned above, an image processing device is provided according to the present application, including a device body. A connecting compartment is provided on the device body. An internal connecting assembly is provided in the connecting compartment, and the internal connecting assembly is electrically connected to both a power supply circuit and a data communication circuit of the device body.

The image processing device further includes an external connecting assembly. The connecting compartment is configured to be detachably connected to the external connecting assembly, which is a power supply assembly in one case and is a communication assembly in another case.

In the one case where the connecting compartment is connected to the power supply assembly, the power supply assembly is electrically connected to the power supply circuit of the device body through the internal connecting assembly to supply power to the device body.

In the another case where the connecting compartment is connected to the communication assembly, the communication assembly is electrically connected to the data communication circuit of the device body through the internal connecting assembly to communicate data with the device body.

Preferably, the internal connecting assembly includes a first connecting PCB mounted in the connecting compartment, and the first connecting PCB is provided with a positive contact and a negative contact that are electrically connected to the power supply circuit of the device body, and multiple signal contacts electrically connected to the data communication circuit of the device body.

Preferably, the positive contact is an elastic conductive member arranged in a central region of the first connecting PCB, and the negative contact is a conductive ring arranged in a peripheral region of the first connecting PCB.

Preferably, the power supply assembly includes a battery cover and a battery mounted in the battery cover, and the battery cover is configured to be detachably connected to the connecting compartment. A positive electrode of the battery is configured to abut against the positive contact, and a negative electrode of the battery abuts against and is electrically connected to an inner wall of the battery cover. A conductive extension ring is provided at a front end of the battery cover and is configured to abut against the negative contact.

Preferably, the internal connecting assembly further includes a conductive spring sheet mounted in the connecting compartment. The conductive spring sheet covers the negative contact and undulates circumferentially. The conductive extension ring is configured to abut against the conductive spring sheet.

Preferably, the communication assembly includes a connecting cover, a second connecting PCB mounted in the connecting cover, and a connecting cable connected to the connecting cover. The connecting cover is configured to be detachably connected to the connecting compartment, and the connecting cable is configured to be electrically connected to an external device. The second connecting PCB is provided with multiple signal pins, and the signal pins are connected to data wires in the connecting cable and are configured to be electrically connected to the respective signal contacts.

Preferably, the second connecting PCB is further provided with a positive connecting member and a negative connecting member. The positive connecting member is connected to a positive wire in the connecting cable and is configured to be electrically connected to the positive contact, and the negative connecting member is connected to a negative wire in the connecting cable and is configured to be electrically connected to the negative contact.

Preferably, the internal connecting assembly further includes a conductive spring sheet mounted in the connecting compartment. The conductive spring sheet covers the negative contact and undulates circumferentially. The negative connecting member is configured to abut against the conductive spring sheet.

Preferably, the image processing device further includes a positioning protrusion and a positioning recess. The positioning protrusion is configured to fit with the positioning recess for angular positioning of the connecting cover with respect to the connecting compartment.

The positioning protrusion is provided on an outer edge of the second connecting PCB, and the positioning recess is provided on an inner wall of the connecting compartment; or
the positioning protrusion is provided on an inner wall of the connecting cover, and the positioning recess is provided on an outer wall of the connecting compartment; or
the positioning protrusion is provided on the inner wall of the connecting compartment, and the positioning recess is provided on the outer edge of the second connecting PCB; or
the positioning protrusion is provided on the outer wall of the connecting compartment and the positioning recess is provided on the inner wall of the connecting cover.

Preferably, one of the internal connecting assembly and the external connecting assembly is a female connector, and the other is a male connector configured to fit with the female connector by insertion.

Preferably, the image processing device is specifically a night vision device.

An electrical connection mechanism is further provided according to the present application, including a connecting compartment, an internal connecting assembly provided in the connecting compartment, and an external connecting assembly. The internal connecting assembly is electrically connected to both a power supply circuit and a data communication circuit of an electronic device, and the connecting compartment is configured to be detachably connected to the external connecting assembly, which is a power supply assembly in one case and a communication assembly in another case.

In the one case where the connecting compartment is connected to the power supply assembly, the power supply assembly is electrically connected to the power supply circuit of the electronic device through the internal connecting assembly to supply power to the electronic device.

In the another case where the connecting compartment is connected to the communication assembly, the communication assembly is electrically connected to the data communication circuit of the electronic device through the internal connecting assembly to communicate data with the electronic device.

Preferably, the internal connecting assembly includes a first connecting PCB mounted in the connecting compartment, and the first connecting PCB is provided with a positive contact and a negative contact that are electrically connected to the power supply circuit of the electronic device, and multiple signal contacts electrically connected to the data communication circuit of the electronic device.

Preferably, the power supply assembly includes a battery cover and a battery mounted in the battery cover, and the battery cover is configured to be detachably connected to the connecting compartment. A positive electrode of the battery is configured to abut against the positive contact, and a negative electrode of the battery abuts against and is electrically connected to an inner wall of the battery cover. A conductive extension ring is provided at a front end of the battery cover and is configured to abut against the negative contact.

Preferably, the communication assembly includes a connecting cover, a second connecting PCB mounted in the connecting cover, and a connecting cable connected to the connecting cover. The connecting cover is configured to be detachably connected to the connecting compartment, and the connecting cable is configured to be electrically connected to an external device. The second connecting PCB is provided with multiple signal pins, and the signal pins are connected to data wires in the connecting cable and are configured to be electrically connected to the respective signal contacts.

Preferably, the second connecting PCB is further provided with a positive connecting member and a negative connecting member. The positive connecting member is connected to a positive wire in the connecting cable and is configured to be electrically connected to the positive contact, and the negative connecting member is connected to a negative wire in the connecting cable and is configured to be electrically connected to the negative contact.

The image processing device according to the present application includes a device body, a connecting compartment, an internal connecting assembly, and an external connecting assembly. The device body is a main structure of the image processing device, and is mainly configured for the installation and accommodation of other parts. The power supply circuit and the data communication circuit are arranged in the device body. The connecting compartment is arranged on the device body and is mainly used for the connection of the external connecting assembly. The internal connecting assembly is arranged in the connecting compartment and electrically connected to both the power supply circuit and the data communication circuit in the device body. The connecting compartment is configured to be detachably connected to the external connecting assembly. Specifically, the external connecting assembly is a power supply assembly in one case and is a communication assembly in another case. Through connecting and disconnecting operations between the external connecting assembly and the connecting compartment, the internal connecting assembly in the connecting compartment can be electrically connected to the power supply assembly in the one case and to the communication assembly in the another case. That is, the connecting compartment has at least two operational modes. When the external connecting assembly is the power supply assembly and is connected to the connecting compartment, the connecting compartment is in a first operational mode, i.e., a power supply compartment mode. In this mode, the power supply assembly is electrically connected to the power supply circuit of the device body through the internal connecting assembly to supply power to the device body. When the external connecting assembly is the communication assembly and is connected to the connecting compartment, the connecting compartment is in a second operational mode, i.e., a communication compartment mode. In this mode, the communication assembly is electrically connected to the data communication circuit of the device body through the internal connecting assembly to communicate data with the device body. In the image processing device according to the present application, the internal connecting assembly is electrically connected to the power supply circuit and the data communication circuit of the device body, and the power supply assembly or the communication assembly selectively serves as the external connecting assembly to be electrically connected to the internal connecting assembly. In this way, the connecting compartment has at least two operational modes, namely the power supply compartment mode and the communication compartment mode, thereby performing the functions of power supply to the device body and data communication with the device body. Compared with the related art, the internal connecting assembly in the present application is arranged in the connecting compartment, which means that the internal connecting assembly is integrated with the connecting compartment, so that the internal connecting assembly effectively utilizes an internal space of the connecting compartment without taking up additional space of the device body. In summary, the image processing device according to the present application has expanded product operational mode and minimized product size while performing power supply and data communication functions, thereby realizing a miniaturized product design.

### BRIEF DESCRIPTION OF THE DRAWINGS

Hereinafter, drawings to be applied in embodiments of the present application or in the related art are briefly described, so as to illustrate technical solutions according to embodiments of the present application or in the related art more clearly. Apparently, the drawings in the following description only show some embodiments of the present application, and other drawings may be obtained by those skilled in the art based on the provided drawings without any creative effort.
FIG. 1 is a general structural schematic view of a specific embodiment according to the present application.
FIG. 2 is an exploded structural view of FIG. 1.
FIG. 3 is an exploded structural view of a device body and an internal connecting assembly shown in FIG. 1.
FIG. 4 is a schematic view showing the assembled structure of the device body and the internal connecting assembly shown in FIG. 1.
FIG. 5 is a longitudinal sectional view of FIG. 4.
FIG. 6 is a general structural schematic view of another specific embodiment according to the present application.
FIG. 7 is an exploded structural view of FIG. 6.
FIG. 8 is a detailed structural schematic view of an external connecting assembly shown in FIG. 6.
FIG. 9 is a longitudinal sectional view of FIG. 8.
FIG. 10 is a schematic view showing another structure of the internal connecting assembly.
FIG. 11 is a schematic view showing another structure of the internal connecting assembly.
FIG. 12 is a schematic view showing another structure of the internal connecting assembly.

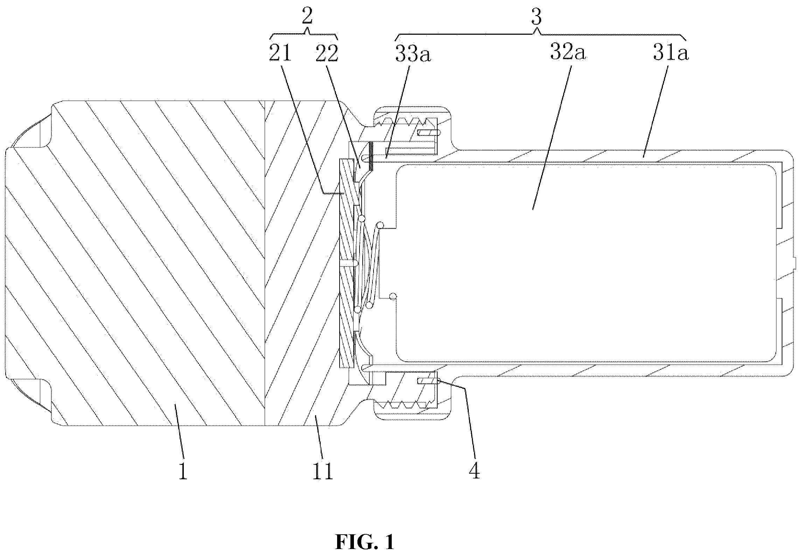

**Reference numerals in FIGS. 1 to 12:**

| | | | |
|---|---|---|---|
| 1 | device body, | 2 | internal connecting assembly, |
| 3 | external connecting assembly, | 4 | seal ring, |
| 5 | positioning protrusion, | 6 | positioning recess, |
| 11 | connecting compartment, | 21 | first connecting PCB, |
| 22 | conductive spring sheet, | 31a | battery cover, |
| 32a | battery, | 33a | conductive extension ring, |
| 31b | connecting cover, | 32b | second connecting PCB, |
| 33b | connecting cable, | 211 | positive contact, |
| 212 | negative contact, | 213 | signal contact, |
| 321 | positive connecting member, | 322 | negative connecting member, |
| 323 | signal pin. | | |

### DETAILED DESCRIPTION OF THE EMBODIMENTS

The technical solutions according to the embodiments of the present application will be described clearly and completely as follows in conjunction with the drawings in the embodiments of the present application. It is apparent that the described embodiments are only some of the embodiments of the present application, rather than all the embodiments. All other embodiments obtained by those skilled in the art based on the embodiments of the present application without any creative work shall fall within the protection scope of the present application.

It should be noted that in the case that there is a directional indication (such as up, down, left, right, front, back) in the embodiments of the present application, the directional indication is only used to explain the relative position relationship, movement, etc. between and among the components in a specific posture (as shown in the drawings). The directional indication changes as the specific posture varies. In addition, in the case that the embodiments of the present application is described by terms such as "first" and "second", the terms "first", "second", etc. are only for description purposes, and should not be construed as indicating or implying their relative importance or implicitly specifying the number of technical features indicated. Therefore, a feature defined by "first" and "second" may include explicitly or implicitly at least one such feature. In addition, the technical solutions of the various embodiments can be combined with each other, and such combined technical solution should be capable of being implemented by those skilled in the art. If a combination of the technical solutions is self-contradictory or cannot be implemented, it should be considered that such combination of the technical solutions neither exist nor fall within the protection scope of the present application.

Reference is made to FIG. 1, which is a general structural schematic view of a specific embodiment according to the present application.

In a specific embodiment of the present application, an image processing device includes a device body 1, a connecting compartment 11, an internal connecting assembly 2, and an external connecting assembly 3.

The device body 1 is a main structure of the image processing device, which is mainly used for the installation and accommodation of other parts. For example, a component such as a core module is mounted in the device body 1. The device body 1 may specifically be a body of a night vision device, camera, monitor, etc. A power supply circuit and a data communication circuit are provided in the device body 1.

A connecting compartment 11 is arranged on the device body 1 and is configured to be connected to the external connecting assembly 3. Generally, the connecting compartment 11 is specifically arranged at an end of the device body 1, and may be in the shape of a tube, a groove or the like overall. The connecting compartment 11 generally has a circular cross-section, so as to facilitate the mounting of a battery 32a or the connection with a pipeline. Of course, the specific shape of the connecting compartment 11 may vary and may be adjusted according to actual requirements.

The internal connecting assembly 2 is arranged in the connecting compartment 11 and electrically connected to both the power supply circuit and the data communication circuit in the device body 1.

The connecting compartment 11 is configured to be detachably connected to the external connecting assembly 3. Specifically, the external connecting assembly 3 is a power supply assembly in one case and a communication assembly in another case. Through connecting and disconnecting operations between the external connecting assembly and the connecting compartment, the internal connecting assembly 2 in the connecting compartment 11 can be electrically connected to the power supply assembly in the one case and to the communication assembly in the another case. That is, the connecting compartment 11 has at least two operational modes. When the external connecting assembly 3 is the power supply assembly and is connected to the connecting compartment 11, the connecting compartment 11 is in a first operational mode, i.e., a power supply compartment mode. In this mode, the power supply assembly is electrically connected to the power supply circuit of the device body 1 through the internal connecting assembly 2 to supply power to the device body 1. When the external connecting assembly 3 is the communication assembly and is connected to the connecting compartment 11, the connecting compartment 11 is in a second operational mode, i.e., a communication compartment mode. In this mode, the communication assembly is electrically connected to the data communication circuit of the device body 1 through the internal connecting assembly 2 to communicate data with the device body 1. Generally, one end of the external connecting assembly 3 is configured to be electrically connected to the internal connecting assembly 2, and the other end of the external connecting assembly 3 is configured to be electrically connected to an external device.

In the image processing device according to the present embodiment, the internal connecting assembly 2 is electrically connected to the power supply circuit and the data communication circuit of the device body 1, and the power supply assembly or the communication assembly selectively serves as the external connecting assembly 3 to be electrically connected to the internal connecting assembly 2. In this way, the connecting compartment 11 has at least two operational modes, namely the power supply compartment mode and the communication compartment mode, thereby performing the functions of power supply to the device body and data communication with the device body 1. Compared with the related art, the internal connecting assembly 2 in the present application is arranged in the connecting compartment 11, which means that the internal connecting assembly 2 is integrated with the connecting compartment 11, so that the internal connecting assembly 2 effectively utilizes an internal space of the connecting compartment 11 without taking up additional space of the device body 1.

In summary, the image processing device according to the present embodiment has expanded product operational mode and minimized product size while performing power supply and data communication functions, thereby realizing a miniaturized product design.

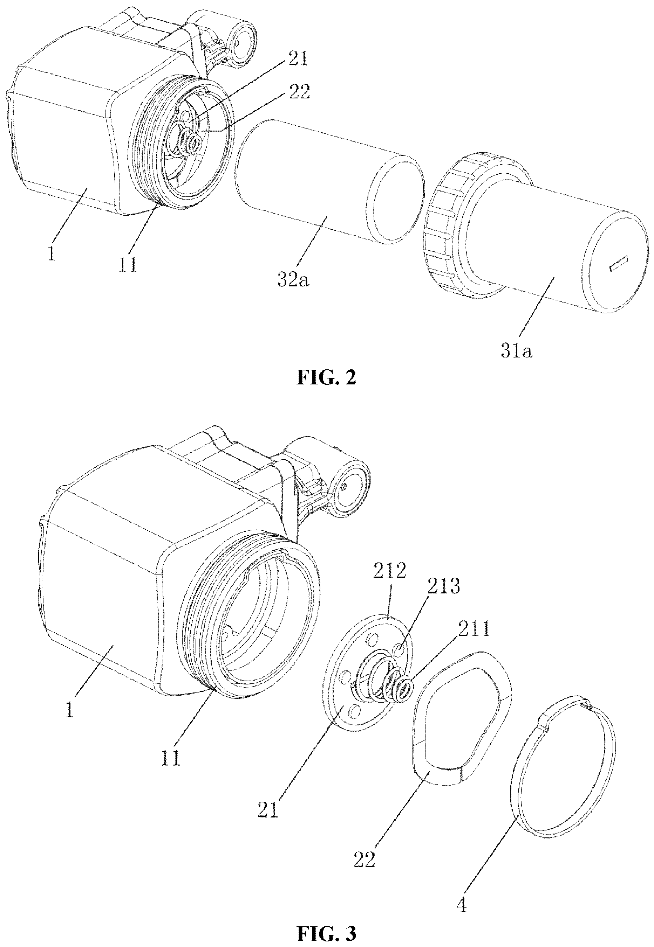

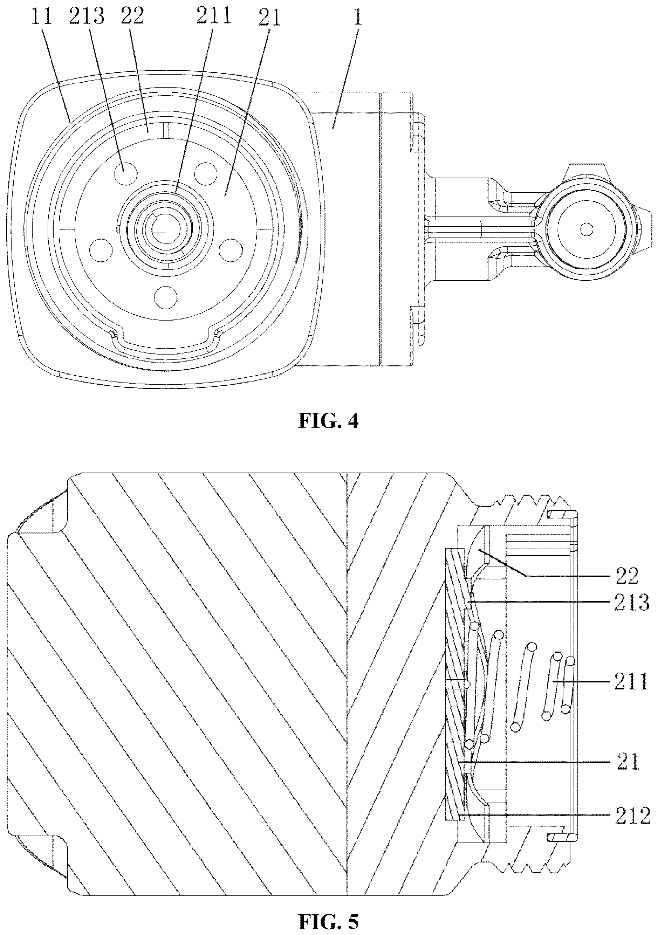

Reference is made to FIGS. 3 to 5, where FIG. 3 is an exploded structural view of the device body 1 and the internal connecting assembly 2 shown in FIG. 1, FIG. 4 is a schematic view showing the assembled structure of the device body 1 and the internal connecting assembly 2 shown in FIG. 1, and FIG. 5 is a longitudinal sectional view of FIG. 4.

In an embodiment related to the internal connecting assembly 2, the internal connecting assembly 2 includes a first connecting PCB (printed circuit board) 21, and a positive contact 211, a negative contact 212, and a signal contact 213 are provided on the first connecting PCB 21. The first connecting PCB 21 is a main part of the internal connecting assembly 2, and is specifically mounted in the connecting compartment 11. Generally, the first connecting PCB 21 is mounted in the connecting compartment 11 by fasteners such as bolts that are threadedly connected to the connecting compartment 11, or adhered in the connecting compartment 11 by adhesive. The positive contact 211 and the negative contact 212 are both provided on the first connecting PCB 21 and both electrically connected to the power supply circuit of the device body 1 to serve as power supply connection terminals of the power supply circuit. The signal contact 213 is also provided on the first connecting PCB 21 and is plural in number. All of the signal contacts 213 are electrically connected to the data communication circuit of the device body 1 to serve as signal I/O (input/output) ports of the data communication circuit.

Generally, each of the positive contact 211, the negative contact 212, and the signal contacts 213 on the first connecting PCB 21 may be stably and electrically connected to a corresponding circuit in the device body 1 through a flat cable, a contact or the like.

In an embodiment related to the positive contact 211, the positive contact 211 is specifically of an elastic conductive member structure, such as a conductive spring, and is specifically arranged in a central region of the first connecting PCB 21. For example, in the case that the first connecting PCB 21 is circular, the elastic conductive member is arranged at a center of the first PCB. Alternatively, the positive contact 211 may be of a solder pad structure, a conductive disk structure or the like, and the specific position of the positive contact 211 is not limited to the central region of the first connecting PCB 21, but may be off-center, for example.

In an embodiment related to the negative contact 212, the negative contact 212 is specifically of a conductive ring structure, and is specifically provided in a peripheral region of the first connecting PCB 21. Generally, the negative contact 212 is specifically annular in shape. In the case that the first connecting PCB 21 is circular, the conductive ring wraps around an outer edge of the first connecting PCB 21, forming a conductive edge cover of the first connecting PCB 21 along a circumference thereof. Alternatively, the negative contact 212 may be of an arc structure, or may be multiple solder pads, conductive disks or the like distributed on the first connecting PCB 21 in a circumferential direction. The specific position of the negative contact 212 is not limited to the peripheral region of the first connecting PCB 21, but may be in a region between the peripheral region and the central region, for example.

In an embodiment related to the signal contacts 213, each of the signal contacts 213 is specifically of a solder pad structure or a conductive disk structure, and the signal contacts 213 are uniformly or non-uniformly distributed in a circumferential direction of the first connecting PCB 21. Generally, each of the signal contacts 213 is distributed in the region between the central region and the peripheral region of the first connecting PCB 21 to avoid a short circuit caused by contact between the signal contacts 213 and the positive contact 211 and the negative contact 212. Meanwhile, each of the signal contacts 213 is configured for the data transmission of video data, image data, control data, and other types of data.

Reference is made to FIG. 2, which is an exploded structural view of FIG. 1.

In an embodiment related to the external connecting assembly 3, when the external connecting assembly 3 is specifically the power supply assembly, the external connecting assembly 3 includes a battery cover 31a and a battery 32a. The battery cover 31a is configured to be detachably connected to the connecting compartment 11, and the battery 32a is mounted in the battery cover 31a. When the battery cover 31a is connected to the connecting compartment 11 in place, a positive electrode of the battery 32a abuts against and is electrically connected to the positive contact 211 on the first connecting PCB 21. For example, the positive electrode of the battery 32a abuts against the elastic conductive member. Furthermore, a negative electrode of the battery 32a abuts against an inner wall of the battery cover 31a, and the battery cover 31a is a conductor, so that the negative electrode of the battery 32a is electrically connected to the battery cover 31a. A conductive extension ring 33a is provided at a front end of the battery cover 31a, and extends a predetermined length toward the front of the battery cover 31a, so that when the battery cover 31a is connected to the connecting compartment 11 in place, a front end of the conductive extension ring 33a abuts against and is electrically connected to the negative contact 212 on the first connecting PCB 21. For example, the front end of the conductive extension ring 33a abuts against the conductive ring.

Alternatively, the battery cover 31a is in direct electrical connection to the connecting compartment 11, so as to be electrically connected to the negative contact 212 on the first connecting PCB 21 through the connecting compartment 11. In this case, there is no need to provide the conductive extension ring 33a. For example, in a case that the front end of the battery cover 31a is threadedly connected to the connecting compartment 11, the negative electrode of the battery 32a can be electrically connected to a metallic threaded portion of the connecting compartment 11 through the battery cover 31a, so as to be electrically connected to the negative contact 212 on the first connecting PCB 21 through the metallic threaded portion. Alternatively, in a case that a wall of the connecting compartment 11 is made of a metallic material, the negative electrode of the battery 32a can be electrically connected to the wall of the connecting compartment 11 through the battery cover 31a, so as to be electrically connected to the negative contact 212 on the first connecting PCB 21 through the wall of the connecting compartment 11.

In an embodiment related to the battery cover 31a, the battery cover 31a is specifically of a tube structure, such as a cylindrical tube or a rectangular tube, so as to facilitate the mounting of the battery 32a inside the tube, so that the negative electrode of the battery 32a abuts against and is electrically connected to the inner wall of the battery cover 31a at the bottom of the battery cover 31a stably.

In an embodiment related to the battery 32a, parameters, such as the model, type and size of the battery 32a may vary. For example, the battery 32a may be a dry battery, an alkaline battery or a lithium battery. Also, the number of the battery 32a to be mounted in the battery cover 31a may vary. For example, only one battery 32a may be mounted, or multiple batteries 32a may be mounted. The parameters such as the model and number of the battery 32a are determined according to the power supply requirements of the device body 1.

Further, as power supply requirements vary among device bodies 1, the parameters such as the model and number of the battery 32a mounted in the battery cover 31a may be changed accordingly. For example, an external threaded portion is provided on an outer wall of the connecting compartment 11, and an internal threaded portion is provided on the inner wall of the battery cover 31a at the front end of the battery cover 31a, thereby enabling the battery cover 31a to be threadedly connected to the connecting compartment 11. With such arrangement, when the parameters such as the model or number of the battery 32a need to be changed, it is only necessary to remove a current battery cover 31a from the connecting compartment 11 and then mount an appropriate battery cover 31a on the connecting compartment 11.

The detachable connection between the connecting compartment 11 and the battery cover 31a is not limited to the threaded connection described above, and others such as a snap connection are also possible.

Reference is made to FIG. 3, which is an exploded structural view of the device body 1 and the internal connecting assembly 2 shown in FIG. 1.

In addition, due to limitations in structure, size or the like, the front end of the conductive extension ring 33a described above may fail to directly abut against the negative contact 212 on the first connecting PCB 21 or may be difficult to stably abut against the negative contact 212 on the first connecting PCB 21. In this regard, the internal connecting assembly 2 is provided with a conductive spring sheet 22 according to the present embodiment. Specifically, the conductive spring sheet 22 is mounted in the connecting compartment 11 and covers the negative contact 212, that is, the conductive spring sheet 22 is located between the negative contact 212 and the conductive extension ring 33a, so that the conductive extension ring 33a can be electrically connected to the negative contact 212 only by abutting against and being electrically connected to the conductive spring sheet 22. Since the negative contact 212 is generally a conductive ring arranged in the peripheral region of the first connecting PCB 21, the conductive spring sheet 22 may also be annular accordingly and covers the peripheral region of the first connecting PCB 21. Furthermore, the conductive spring sheet 22 is not a flat annular sheet, but undulates circumferentially, i.e., the conductive spring sheet 22 has an arc-shaped arched region and/or an arc-shaped recessed region along its circumferential direction. With such arrangement, when the battery cover 31a is connected to the connecting compartment 11 in place, for example when battery cover 31a is tightly screwed onto the connecting compartment 11, the front end of the conductive extension ring 33a presses against the conductive spring sheet 22, causing the conductive spring sheet 22 to elastically deform and be flattened, so as to cause the conductive spring sheet 22 to tightly contact the conductive ring, thereby ensuring the stability of the electrical connection among the conductive extension ring 33a, the battery cover 31a, the negative electrode of the battery 32a, and the negative contact 212.

In an embodiment related to the conductive spring sheet 22, since the conductive spring sheet 22 is elastic, the conductive spring sheet 22 may be directly fastened in the connecting compartment 11 through elastic engagement. Furthermore, a limiting block or the like may protrude from the inner wall of the connecting compartment 11 to clamp the conductive spring sheet 22 at a circumference thereof.

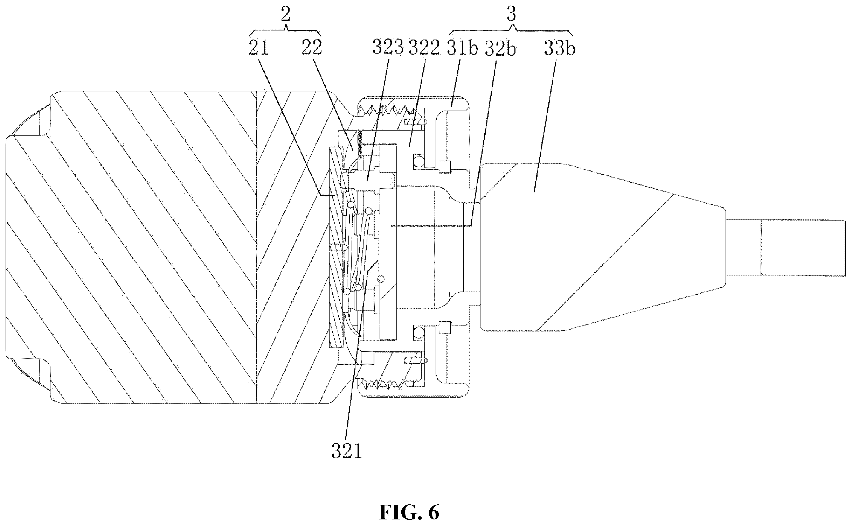

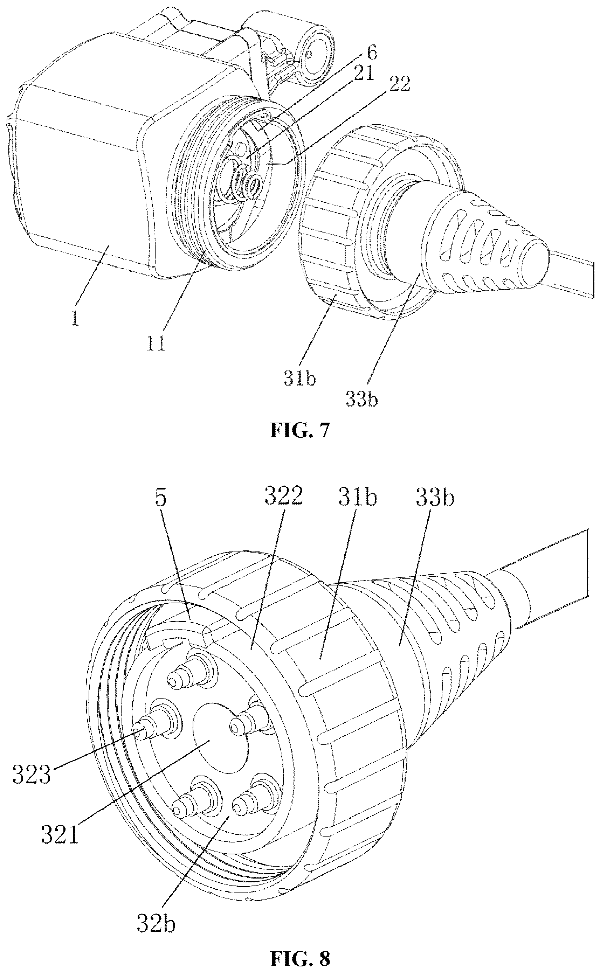

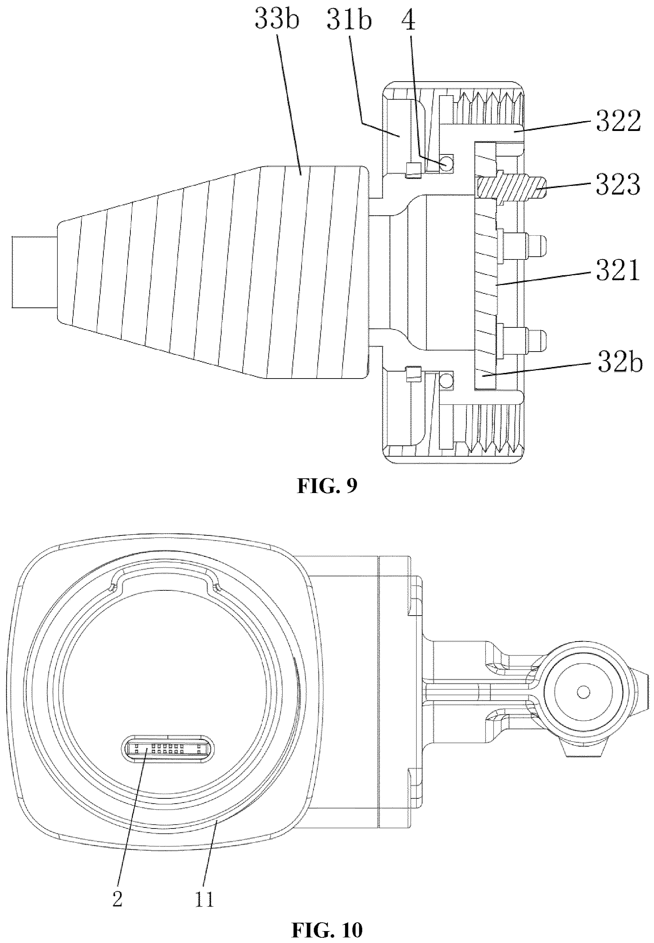

Reference is made to FIGS. 6 to 9, where FIG. 6 is a general structural schematic view of another specific embodiment according to the present application, FIG. 7 is an exploded structural view of FIG. 6, FIG. 8 is a detailed structural schematic view of the external connecting assembly 3 shown in FIG. 6, and FIG. 9 is a longitudinal sectional view of FIG. 8.

In another embodiment related to the external connecting assembly 3, when the external connecting assembly 3 is specifically the communication assembly, the external connecting assembly 3 includes a connecting cover 31b, a second connecting PCB 32b, a connecting cable 33b, and signal pins 323.

The connecting cover 31b has a shape similar to that of the battery cover 31a described above, and is also of a tube or a disk shape, in which other parts of the external connecting assembly 3 can be mounted and accommodated. The connecting cover 31b is configured to be detachably connected to the connecting compartment 11.

One end of the connecting cable 33b is connected to the connecting cover 31b, and the other end of the connecting cable 33b is configured to be electrically connected to an external device. A positive wire and a negative wire for power supply, as well as multiple data wires for data communication, are integrated in the connecting cable 33b.

The second connecting PCB 32b is mounted in the connecting cover 31b and has a shape and structure similar to that of the first connecting PCB 21 described above. The multiple signal pins 323 are provided on the second connecting PCB 32b. Specifically, the signal contacts 323 are provided on a surface of the second connecting PCB 32b and connected to the data wires in the connecting cable 33b, and are configured to be electrically connected to the respective signal contacts 213 on the first connecting PCB 21.

Since the signal contacts 213 are generally distributed between the central region and the peripheral region of the first connecting PCB 21, the signal pins 323 according to the present embodiment are correspondingly distributed between a central region and a peripheral region of the second connecting PCB 32b and are also distributed circumferentially on the second connecting PCB 32b, so that the signal contacts 323 are aligned with the respective signal contacts 213 when connecting the connecting cover 31b to the connecting compartment 11, thereby facilitating stable abutting and electrical connection between the signal contacts 323 and the respective signal contacts 213.

With such arrangement, according to the present embodiment, the device body 1 can be communicatively connected with the external device through abutting and electrical connection between the signal contacts 213 on the first connecting PCB 21 and the respective signal pins 323 on the second connecting PCB 32b, thereby ensuring data communication of video, images, control instructions, etc.

In an embodiment related to the signal pins 323, each of the signal contacts 323 is a spring pin, specifically a pogo pin. When the connecting cover 31b is connected to the connecting compartment 11, the pogo pin can elastically extend and retract when abutting against a signal contact 213, so as to press against the respective signal contact 213 under an elastic preload force, thereby improving the stability of the data communication.

In addition, the connecting cover 31b is typically connected to the connecting compartment 11 by a threaded connection. The signal contacts 213 are distributed circumferentially on the first connecting PCB 21, and the signal pins 323 are also distributed circumferentially on the second connecting PCB 32b. As a result, the user, when screwing the connecting cover 31b onto the connecting compartment 11, is unable to accurately determine whether the signal contacts 323 on the second connecting PCB 32b are properly aligned with and abut against the respective signal contacts 213 on the first connecting PCB 21, which may causes a deviation in an angular position, resulting in that the signal contacts 323 fail to abut against or be electrically connected to the respective signal contacts 213 properly. In this regard, according to the present embodiment, a positioning protrusion 5 is provided on an outer edge of the second connecting PCB 32b, and a positioning recess 6 is provided on the inner wall of the connecting compartment 11. Specifically, the positioning protrusion 5 is configured to be in protrusion-recess fit with the positioning recess 6. There is a specific positional relationship between the positioning protrusion 5 and the signal pins 323 on the second connecting PCB 32b, and correspondingly, there is also a specific positional relationship between the positioning recess 6 and the signal contacts 213 on the first connecting PCB 21. Thus, when the positioning protrusion 5 is fitted with the positioning recess 6, the signal contacts 323 are aligned with and electrically connected to the respective signal contacts 213 properly. With such arrangement, when screwing the connecting cover 31b onto the connecting compartment 11, after the connecting cover 31b has been screwed to a certain degree, it is only necessary to fine-tune a circumferential position of the connecting cover 31b, until the positioning protrusion 5 fits with the positioning recess 6, so as to ensure that the signal contacts 323 are electrically connected to the respective signal contacts 213 stably and properly.

The specific positions of the positioning protrusion 5 and the positioning recess 6 described above are not limited to the above embodiment. In another example, the positioning protrusion 5 is provided on an inner wall of the connecting cover 31b, and the positioning recess 6 is provided on the outer wall of the connecting compartment 11. In this way, when the connecting compartment 11 is inserted in and engaged with the connecting cover 31b, the angular position of the connecting cover 31b with respect to the connecting compartment 11 can also be directly determined through the fit between the positioning protrusion 5 and the positioning recess 6. Alternatively, the positions of the positioning protrusion 5 and the positioning recess 6 may be provided opposite to that in the above embodiment. For example, the positioning protrusion 5 is provided on the inner wall of the connecting compartment 11, and the positioning recess 6 is provided on the outer edge of the second connecting PCB 32b. Or, the positioning protrusion 5 is provided on the outer wall of the connecting compartment 11, and the positioning recess 6 is provided on the inner wall of the connecting cover 31b. With such arrangements, the same technical effect as described above can be achieved, which will not be repeated here.

In order to facilitate the mounting, dismounting and maintenance operations of the external connecting assembly 3 on the connecting compartment 11, according to the present embodiment, an external threaded portion is provided on the outer wall of the connecting compartment 11, and an internal threaded portion is provided on the inner wall of the connecting cover 31b at a front end of the connecting cover 31b, so that the connecting cover 31b can be threadedly connected to the connecting compartment 11. With such arrangement, when the external connecting assembly 3 needs to be replaced or maintained, it is only necessary to remove a current connecting cover 31b from the connecting compartment 11 and then connect a connecting cover 31b of another external connecting assembly 3 to the connecting compartment 11.

The detachable connection between the connecting compartment 11 and the connecting cover 31b is not limited to the threaded connection described above, and others such as a snap connection are also possible.

Further, when the external connecting assembly 3 is specifically the communication assembly, it may be necessary to supply power to the device body 1 during the data communication between the device body 1 and the external device, so as to enable a large amount of image data to be transmitted in full. In this regard, according to the present embodiment, in addition to the connecting cover 31b, the second connecting PCB 32b, the connecting cable 33b, and the signal pins 323, the external connecting assembly 3 further includes a positive connecting member 321 and a negative connecting member 322.

The positive connecting member 321 and the negative connecting member 322 are arranged on the second connecting PCB 32b. The positive connecting member 321 is connected to the positive wire in the connecting cable 33b, and is configured to abut against and be electrically connected to the positive contact 211 on the first connecting PCB 21. The negative connecting member 322 is connected to the negative wire in the connecting cable 33b, and is configured to abut against and be electrically connected to the negative contact 212 on the first connecting PCB 21.

With such arrangement, when the connecting cover 31b is connected to the connecting compartment 11 in place, the positive connecting member 321 on the second connecting PCB 32b abuts against and is electrically connected to the positive contact 211, such as an elastic conductive member, on the first connecting PCB 21. The positive connecting member 321 on the second connecting PCB 32b is also connected to the positive wire in the connecting cable 33b, thus electrically connecting the positive contact 211 on the first connecting PCB 21 to a positive electrode of a power supply of the external device. Meanwhile, the negative connecting member 322 on the second connecting PCB 32b abuts against and is electrically connected to the negative contact 212, such as a conductive ring, on the first connecting PCB 21. The negative connecting member 322 on the second connecting PCB 32b is also connected to the negative wire in the connecting cable 33b, thus electrically connecting the negative contact 212 on the first connecting PCB 21 to a negative electrode of the power supply of the external device.

In summary, according to the present embodiment, during the data communication between the device body 1 and the external device, the device body 1 is directly powered by the external device without the need of the battery 32a, thereby eliminating the weight contribution of battery 32a to the product and realizing a lightweight design of the product. Furthermore, the size of the product is reduced due to the elimination of the installation space for the battery 32a.

In an embodiment related to the positive connecting member 321, since the positive contact 211 is generally provided in the central region of the first connecting PCB 21, the positive connecting member 321 is specifically provided in the central region of the second connecting PCB 32b correspondingly, so that the positive connecting member 321 can be kept in alignment with the positive contact 211 when connecting the connecting cover 31b to the connecting compartment 11, thereby facilitating stable abutting and electrical connection between the positive connecting member 321 and the positive contact 211. Generally, the positive connecting member 321 may specifically be a solder pad, a conductive disk, or other structures.

The negative contact 212 is generally provided in the peripheral region of the first connecting PCB 21 and the negative contact 212 is generally of a conductive ring structure. In view of this, in an embodiment related to the negative connecting member 322, the negative connecting member 322 is specifically arranged in the peripheral region of the second connecting PCB 32b, and the negative connecting member 322 is also ring-shaped, so that the negative connecting member 322 can be kept in alignment with the negative contact 212 when connecting the connecting cover 31 to the connecting compartment 11, thereby facilitating stable abutting and electrical connection between the negative connecting member 322 and the negative contact 212.

In addition, due to limitations in structure, size or the like, a front end of the negative connecting member 322 described above may fail to directly abut against the negative contact 212 on the first connecting PCB 21, or may be difficult to stably abut against the negative contact 212 on the first connecting PCB 21. In this regard, in the present embodiment, the front end of the negative connecting member 322 is configured to abut against and be electrically connected to a conductive spring sheet 22 in the connecting compartment 11, so that the negative connecting member 322 is in stable electrical connection to the negative contact 212 on the first connecting PCB 21 indirectly. Specifically, the conductive spring sheet 22 in this embodiment is similar to the conductive spring sheet 22 described above, which will not be repeated here, except that the conductive spring sheet 22 in this embodiment abuts against the negative connecting member 322 rather than the conductive extension ring 33a. With such arrangement, when the connecting cover 31b is connected to the connecting compartment 11 in place, for example when the connecting cover 31b is tightly screwed to the connecting compartment 11, the front end of the negative connecting member 322 presses against the conductive spring sheet 22, causing the conductive spring sheet 22 to elastically deform and become flattened, so as to cause the conductive spring sheet 22 to be in tight contact with the conductive ring, thereby ensuring the stability of the electrical connection among the negative connecting member 322, the negative wire in the connecting cable 33b, and the negative contact 212.

In addition, a sealing ring 4 is provided on an end face of the connecting compartment 11 according to the present embodiment. When the battery cover 31a or the connecting cover 31b is connected to the connecting compartment 11, the sealing ring 4 serves as a buffer therebetween, and can also eliminate and seal the gap therebetween. Similarly, another sealing ring 4 may be provided between the negative connecting member 322 and an internal blocking plate of the connecting cover 31b to act as a gap filling member and provide sealing and torque adjustment functions.

Reference is made to FIG. 10, which is a schematic view showing another structure of the internal connecting assembly 2.

In another embodiment related to the internal connecting assembly 2, the internal connecting assembly 2 is a Type-C female connector. Correspondingly, the external connecting assembly 3 is specifically a male connector adapted to a Type-C port to fit with the internal connecting assembly 2 by insertion. Alternatively, the internal connecting assembly 2 may be a male connector, while the external connecting assembly 4 may be a female connector correspondingly.

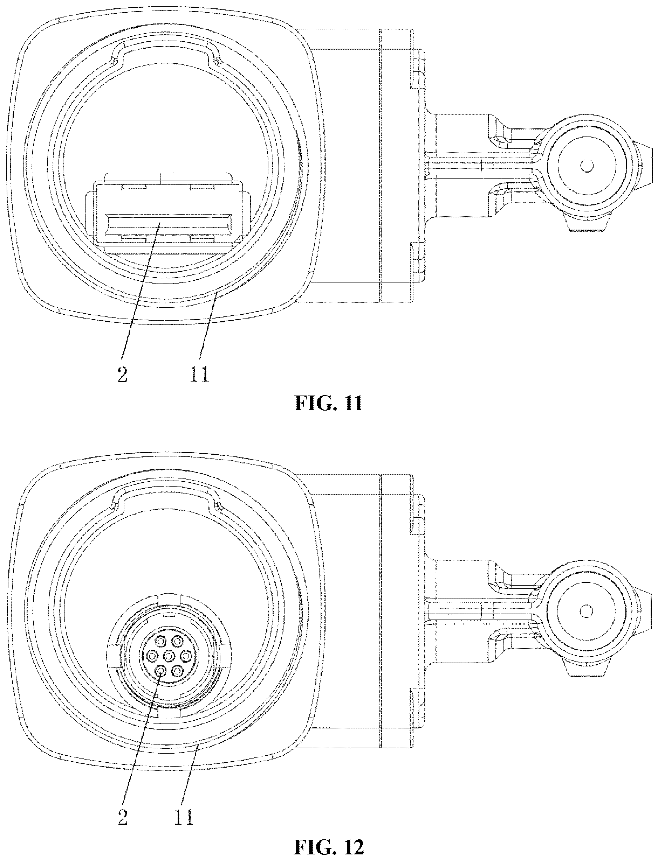

Reference is made to FIG. 11, which is a schematic view showing another structure of the internal connecting assembly 2.

In another alternative embodiment related to the internal connecting assembly 2, the internal connecting assembly 2 is a female USB (universal serial bus) connector. Correspondingly, the external connecting assembly 3 is specifically a male connector adapted to a USB port to fit with the internal connecting assembly 2 by insertion. Alternatively, the internal connecting assembly 2 may be a male connector, while the external connecting assembly 4 may be a female connector correspondingly.

Reference is made to FIG. 12, which is a schematic view showing another structure of the internal connecting assembly 2.

In another embodiment related to the internal connecting assembly 2, the internal connecting assembly 2 is a female aviation connector. Correspondingly, the external connecting assembly 3 is specifically a male connector adapted to an aviation connector port to fit with the internal connecting assembly 2 by insertion. Alternatively, the internal connecting assembly 2 may be a male connector, while the external connecting assembly 4 may be a female connector correspondingly.

In an embodiment related to the image processing device, the image processing device is specifically a night vision device. Alternatively, the image processing device may be an infrared camera, a monitor, a video camera, etc.

An electrical connection mechanism is further provided according to the present embodiment, which includes a connecting compartment 11, an internal connecting assembly 2, and an external connecting assembly 3.

The connecting compartment 11 is configured to be connected with the external connecting assembly 3. Generally, the connecting compartment 11 may be in the shape of a tube, a groove or the like with a circular cross-section, so as to facilitate the mounting of a battery 32a or the connection with a pipeline. Of course, the shape of the connecting compartment 11 may vary and may be adjusted according to actual requirements.

The internal connecting assembly 2 is arranged in the connecting compartment 11 and electrically connected to both a power supply circuit and a data communication circuit of an electronic device.

The connecting compartment 11 is configured to be detachably connected to the external connecting assembly 3. Specifically, the external connecting assembly 3 is a power supply assembly in one case and is a communication assembly in another case. Through connecting and disconnecting operations between the external connecting assembly 3 and the connecting compartment 11, the internal connecting assembly 2 in the connecting compartment 11 can be electrically connected to the power supply assembly in the one case and to the communication assembly in the another case. That is, the connecting compartment 11 has at least two operational modes. When the external connecting assembly 3 is the power supply assembly and is connected to the connecting compartment 11, the connecting compartment 11 is in a first operational mode, i.e., a power supply compartment mode. In this mode, the power supply assembly is electrically connected to the power supply circuit of the electronic device through the internal connecting assembly 2 to supply power to the electronic device. When the external connecting assembly 3 is the communication assembly and is connected to the connecting compartment 11, the connecting compartment 11 is in a second operational mode, i.e., a communication compartment mode. In this mode, the communication assembly is electrically connected to the data communication circuit of the electronic device through the internal connecting assembly 2 to communicate data with the electronic device. Generally, one end of the external connecting assembly 3 is configured to be electrically connected to the internal connecting assembly 2, and the other end of the external connecting assembly 3 is configured to be electrically connected to an external device.

In the electrical connection mechanism according to the present embodiment, the internal connecting assembly 2 is electrically connected to the power supply circuit and the data communication circuit of the electronic device, and the power supply assembly or the communication assembly selectively serves as the external connecting assembly to be electrically connected to the internal connecting assembly 2. In this way, the connecting compartment 11 has at least two operational modes, namely the power supply compartment mode and the communication compartment mode, thereby performing the functions of power supply to the electronic device and data communication with the electronic device. Compared with the related art, the internal connecting assembly 2 in the present embodiment is arranged in the connecting compartment 11, which means that the internal connecting assembly 2 is integrated with the connecting compartment 11, so that the internal connecting assembly 2 effectively utilizes an internal space of the connecting compartment 11 without taking up additional space of the electronic device.

In an embodiment related to the internal connecting assembly 2, the internal connecting assembly 2 is substantially the same as that of the image processing device described above, which will not be repeated here, except that both the positive contact 211 and the negative contact 212 are electrically connected to the power supply circuit of the electronic device to serve as power supply connection terminals of the power supply circuit, and the signal contacts 213 are electrically connected to the data communication circuit of the electronic device to serve as signal I/O ports of the data communication circuit.

In an embodiment related to the external connecting assembly 3, the external connecting assembly 3 may specifically be the power supply assembly in one case and the communication assembly in another case, and the external connecting assembly 3 is the same as that of the image processing device described above, which will not be repeated here.

It should be noted that the electrical connection mechanism according to the present embodiment may be applicable not only to an electronic device such as an image processing device, but also to other electronic devices with power supply and data transmission functions, such as a communication device, a display device, a server, or an intelligent robot.

According to the above description of the disclosed embodiments, those skilled in the art can implement or practice the present application. Various modifications to these embodiments are obvious to those skilled in the art, and the general principles defined herein may be implemented in other embodiments without departing from the spirit and scope of the present application. Therefore, the present application is not to be limited to the embodiments illustrated herein, but should be conformed to the widest scope consistent with the principles and novel features disclosed herein.

## Claims

1. An image processing device, comprising a device body (1), wherein
a connecting compartment (11) is provided on the device body (1), an internal connecting assembly (2) is provided in the connecting compartment (11), and the internal connecting assembly (2) is electrically connected to both a power supply circuit and a data communication circuit of the device body (1);
the image processing device further comprises an external connecting assembly (3), and the connecting compartment (11) is configured to be detachably connected to the external connecting assembly (3), wherein the external connecting assembly (3) is a power supply assembly in one case and is a communication assembly in another case;
in the one case where the connecting compartment (11) is connected to the power supply assembly, the power supply assembly is electrically connected to the power supply circuit of the device body (1) through the internal connecting assembly (2) to supply power to the device body (1); and
in the another case where the connecting compartment (11) is connected to the communication assembly, the communication assembly is electrically connected to the data communication circuit of the device body (1) through the internal connecting assembly (2) to communicate data with the device body (1).

2. The image processing device according to claim 1, wherein the internal connecting assembly (2) comprises a first connecting PCB (21) mounted in the connecting compartment (11), and the first connecting PCB (21) is provided with a positive contact (211) and a negative contact (212) that are electrically connected to the power supply circuit of the device body (1), and a plurality of signal contacts (213) electrically connected to the data communication circuit of the device body (1).

3. The image processing device according to claim 2, wherein the positive contact (211) is an elastic conductive member arranged in a central region of the first connecting PCB (21), and the negative contact (212) is a conductive ring arranged in a peripheral region of the first connecting PCB (21).

4. The image processing device according to claim 2, wherein
the power supply assembly comprises a battery cover (31a) and a battery (32a) mounted in the battery cover (31a), and the battery cover (31a) is configured to be detachably connected to the connecting compartment (11); and
a positive electrode of the battery (32a) is configured to abut against the positive contact (211), a negative electrode of the battery (32a) abuts against and is electrically connected to an inner wall of the battery cover (31a), and a conductive extension ring (33a) is provided at a front end of the battery cover (31a) and is configured to abut against the negative contact (212).

5. The image processing device according to claim 4, wherein the internal connecting assembly (2) further comprises a conductive spring sheet (22) mounted in the connecting compartment (11), the conductive spring sheet (22) covers the negative contact (212) and undulates circumferentially, and the conductive extension ring (33a) is configured to abut against the conductive spring sheet (22).

6. The image processing device according to claim 2, wherein
the communication assembly comprises a connecting cover (31b), a second connecting PCB (32b) mounted in the connecting cover (31b), and a connecting cable (33b) connected to the connecting cover (31b);
the connecting cover (31b) is configured to be detachably connected to the connecting compartment (11), and the connecting cable (33b) is configured to be electrically connected to an external device; and
the second connecting PCB (32b) is provided with a plurality of signal pins (323), and the signal pins (323) are connected to data wires in the connecting cable (33b) and are configured to be electrically connected to the respective signal contacts (213).

7. The image processing device according to claim 6, wherein the second connecting PCB (32b) is further provided with a positive connecting member (321) and a negative connecting member (322), the positive connecting member (321) is connected to a positive wire in the connecting cable (33b) and is configured to be electrically connected to the positive contact (211), and the negative connecting member (322) is connected to a negative wire in the connecting cable (33b) and is configured to be electrically connected to the negative contact (212).

8. The image processing device according to claim 7, wherein the internal connecting assembly (2) further comprises a conductive spring sheet (22) mounted in the connecting compartment (11), the conductive spring sheet (22) covers the negative contact (212) and undulates circumferentially, and the negative connecting member (322) is configured to abut against the conductive spring sheet (22).

9. The image processing device according to claim 6, further comprising a positioning protrusion (5) and a positioning recess (6), wherein
the positioning protrusion (5) is configured to fit with the positioning recess (6) for angular positioning of the connecting cover (31b) with respect to the connecting compartment (11), wherein
the positioning protrusion (5) is provided on an outer edge of the second connecting PCB (32b), and the positioning recess (6) is provided on an inner wall of the connecting compartment (11); or
the positioning protrusion (5) is provided on an inner wall of the connecting cover (31b), and the positioning recess (6) is provided on an outer wall of the connecting compartment (11); or
the positioning protrusion (5) is provided on the inner wall of the connecting compartment (11), and the positioning recess (6) is provided on the outer edge of the second connecting PCB (32b); or
the positioning protrusion (5) is provided on the outer wall of the connecting compartment (11) and the positioning recess (6) is provided on the inner wall of the connecting cover (31b).

10. The image processing device according to claim 1, wherein one of the internal connecting assembly (2) and the external connecting assembly (3) is a female connector, and the other is a male connector configured to fit with the female connector by insertion.

11. The image processing device according to claim 1, wherein the image processing device is a night vision device.

12. An electrical connection mechanism, comprising:
a connecting compartment (11);
an internal connecting assembly (2) provided in the connecting compartment (11); and
an external connecting assembly (3), wherein
the internal connecting assembly (2) is electrically connected to both a power supply circuit and a data communication circuit of an electronic device, and the connecting compartment (11) is configured to be detachably connected to the external connecting assembly (3), wherein the external connecting assembly (3) is a power supply assembly in one case and is a communication assembly in another case;
in the one case where the connecting compartment (11) is connected to the power supply assembly, the power supply assembly is electrically connected to the power supply circuit of the electronic device through the internal connecting assembly (2) to supply power to the electronic device; and
in the another case where the connecting compartment (11)is connected to the communication assembly, the communication assembly is electrically connected to the data communication circuit of the electronic device through the internal connecting assembly (2) to communicate data with the electronic device.

13. The electrical connection mechanism according to claim 12, wherein the internal connecting assembly (2) comprises a first connecting PCB (21) mounted in the connecting compartment (11), and the first connecting PCB (21) is provided with a positive contact (211) and a negative contact (212) that are electrically connected to the power supply circuit of the electronic device, and a plurality of signal contacts (213) electrically connected to the data communication circuit of the electronic device.

14. The electrical connection mechanism according to claim 13, wherein
the power supply assembly comprises a battery cover (31a) and a battery (32a) mounted in the battery cover (31a), and the battery cover (31a) is configured to be detachably connected to the connecting compartment (11); and
a positive electrode of the battery (32a) is configured to abut against the positive contact (211), a negative electrode of the battery (32a) abuts against and is electrically connected to an inner wall of the battery cover (31a), and a conductive extension ring (33a) is provided at a front end of the battery cover (31a) and is configured to abut against the negative contact (212).

15. The electrical connection mechanism according to claim 13, wherein
the communication assembly comprises a connecting cover (31b), a second connecting PCB (32b) mounted in the connecting cover (31b), and a connecting cable (33b) connected to the connecting cover (31b);
the connecting cover (31b) is configured to be detachably connected to the connecting compartment (11), and the connecting cable (33b) is configured to be electrically connected to an external device; and
the second connecting PCB (32b) is provided with a plurality of signal pins (323), and the signal pins (323) are connected to data wires in the connecting cable (33b) and are configured to be electrically connected to the respective signal contacts (213).

16. The electrical connection mechanism according to claim 15, wherein the second connecting PCB (32b) is further provided with a positive connecting member (321) and a negative connecting member (322), the positive connecting member (321) is connected to a positive wire in the connecting cable (33b) and is configured to be electrically connected to the positive contact (211), and the negative connecting member (322) is connected to a negative wire in the connecting cable (33b) and is configured to be electrically connected to the negative contact (212).
